# FASCICULE DE BREVET EUROPEEN

(11) **EP 3 189 261 B1**
(45) Date de publication et mention de la délivrance du brevet: **31.10.2018**
(21) Numéro de dépôt: 15763967.5
(22) Date de dépôt: 03.09.2015
(51) Int. Cl.: F16L 23/08, F01N 13/18

(54) **SYSTÈME POUR LE RACCORDEMENT DE DEUX TUBES**
KOPPLUNGSSYSTEM FÜR ZWEI ROHRE
SYSTEM FOR COUPLING TWO TUBES

(30) Priorité: 04.09.2014 FR 1458303
(43) Date de publication de la demande: 12.07.2017
(73) Titulaire: Etablissements Caillau, 92130 Issy-les-Moulineaux (FR)
(72) Inventeur: PREVOT, Fabrice, F-41130 Selles Sur Cher (FR); RIGOLLET, Nicolas, F-41200 Romorantin (FR); DRIVON, Stéphane, F-41200 Romorantin (FR)
(74) Mandataire: Intès, Didier Gérard André
(86) Numéro de dépôt international: PCT/FR2015/052333
(87) Numéro de publication internationale: WO 2016/034820

(56) Documents cités:
- EP-A1- 1 451 498
- EP-A2- 1 840 439
- WO-A1-2012/013891
- DE-B3- 10 336 351
- DE-U1-202013 001 224

## Description

La présente invention concerne un système pour le raccordement bout à bout de deux tubes, le système comprenant un collier de serrage ayant une bande de serrage apte à être serrée autour des extrémités aboutées des deux tubes.

Plus précisément, l'invention concerne un système de serrage du type précité, pouvant être pré-monté à l'extrémité du premier tube, avant l'aboutement de ce dernier avec le deuxième tube et le serrage de la bande.

Un système de serrage de ce type est connu par les documents EP 1 451 498 et EP 2 598 785, dans le cas particulier où les tubes ont des surfaces d'appui et où la périphérie intérieure du collier délimite un renfoncement recevant ces surfaces.

Dans les documents de brevets précités, le système de serrage comprend des moyens de pré-montage pour, à l'état non serré du collier, solidariser ce collier avec le premier tube avant son accouplement avec le deuxième tube. En quelque sorte, le collier est ainsi mis en attente à l'extrémité du premier tube pour faciliter son accouplement avec le deuxième tube, puis le serrage des deux tubes accouplés.

Les systèmes de serrage décrits dans les documents de brevets précités présentent une rondelle solidarisée avec le collier, et cette rondelle présente des pattes ou analogues permettant le pré-montage de l'ensemble comprenant le collier et la rondelle avec le premier tube.

Les systèmes de ce type donnent satisfaction, mais ils nécessitent l'emploi d'une rondelle. Cette rondelle peut avoir d'autres fonctions que celle de contribuer au pré-montage, en particulier en contribuant à l'étanchéité de l'accouplement des deux tubes une fois qu'ils sont serrés. Cependant, dans certains systèmes, une rondelle d'étanchéité de conformation plus simple peut être utilisée, ou bien on peut éviter l'emploi d'une telle rondelle, en particulier si la conformation des tubes favorise en elle-même l'étanchéité de leur accouplement ou si le niveau d'étanchéité requis est moindre.

Le document EP 1 840 439 divulgue un système pour le raccordement bout à bout de deux tubes, le système comprenant un collier de serrage ayant une bande de serrage apte à être serrée autour des extrémités aboutées des deux tubes, le collier comprenant une patte de retenue, qui présente une portion de fixation par laquelle ladite patte de retenue est fixée à la bande du collier et qui s'étend sensiblement axialement vers une portion d'attache de ladite patte de retenue par laquelle ladite patte de retenue est apte à être attachée au premier tube au voisinage de la première extrémité de ce dernier.

Selon le document EP 1 840 439, cette patte peut, avant le serrage du collier, être attachée à l'un des tubes, par exemple par soudure, pour placer le système en attente, c'est-à-dire en situation pré-montée, sur ce tube, avant son aboutage à l'autre tube et le serrage du collier.

Cependant, ce système pose un problème d'efficacité. En effet, pour assurer un positionnement correct du système en position pré-montée, il faut que la patte soit suffisamment rigide. Or, cette rigidité empêche une déformation aisée de la patte de retenue lors du serrage du collier, ce qui complique cette l'opération de serrage et qui, à l'extrême, peut nuire à l'efficacité du serrage.

D'un autre côté, si la patte est très flexible, de manière à pouvoir être aisément déformée lors du serrage, elle risque de ne pas correctement maintenir le système en position pré-montée, ce qui complique les opérations d'aboutage des tubes et de serrage, et peut également nuire à l'efficacité du serrage. La présente invention vise à proposer un système du type précité pour le raccordement de deux tubes, qui soit sensiblement exempt des inconvénients exposés ci-dessus.

Ainsi, l'invention concerne un système pour le raccordement bout à bout de deux tubes, le système comprenant un collier de serrage ayant une bande de serrage apte à être serrée autour des extrémités aboutées des deux tubes, le collier comprenant une patte de retenue, qui présente une portion de fixation par laquelle ladite patte de retenue est fixée à la bande du collier et qui s'étend sensiblement axialement vers une portion d'attache de ladite patte de retenue par laquelle ladite patte de retenue est apte à être attachée au premier tube au voisinage de la première extrémité de ce dernier, système dans lequel la patte de retenue présente une ondulation située entre sa portion de fixation et sa portion d'attache.

Ainsi, selon l'invention, le système peut être livré avec la patte de retenue fixée à la bande du collier et peut être manipulé comme un tout. Pour le pré-montage, il suffit de disposer le collier devant l'extrémité du premier tube en l'orientant de manière à diriger la portion d'attache de la patte de retenue vers ce tube, de passer la bande autour de l'extrémité du premier tube, puis d'attacher la patte de retenue au premier tube. Ainsi, le système est en attente à l'extrémité du premier tube, qui peut être manipulé comme un tout avec le collier qui lui est attaché, pour être abouté au deuxième tube.

De plus, la patte de retenue peut être fléchie, en particulier pour accompagner la réduction de diamètre du collier due au serrage de la bande et, éventuellement, pour passer la saillie radiale du premier tube. L'ondulation précitée favorise ce fléchissement en formant une sorte de ressort intégré à la patte de retenue. Du fait de son écrouissage, cette ondulation joue en effet le rôle d'un ressort de rappel élastique. Ce ressort est suffisamment raide pour que, à l'état non serré de la bande, la patte de retenue maintienne naturellement le collier dans la position de pré-montage souhaitée, tout en conférant à la patte de retenue la flexibilité souhaitée.

L'ondulation est située sur une partie intermédiaire de la patte de retenue qui forme une transition entre la portion de fixation, sensiblement située sur le diamètre de la bande du serrage, et la portion d'attache, sensiblement située sur le diamètre du premier tube ou, plus précisément sur le diamètre défini par une région du premier tube au voisinage du collier, mais non recouverte par le collier.

La patte de retenue peut être semi-rigide, c'est-à-dire que, d'une part, elle présente la rigidité suffisante pour, lorsqu'elle est attachée au premier tube, maintenir la bande du collier dans la position souhaitée à l'extrémité du premier tube, en particulier une position dans laquelle l'axe du collier est sensiblement aligné avec celui du premier tube et dans laquelle un espace annulaire est délimité entre la périphérie interne de la bande et la périphérie externe du collier. D'autre part, la patte de retenue peut être fléchie lors du serrage, pour accompagner la réduction de diamètre du collier qui se produit lors du serrage, et rester fixée à la bande du collier tout en restant attachée au premier tube. Ces facultés de la patte de retenue à être suffisamment rigide pour maintenir la bande du collier dans la position souhaitée et à être capable de se déformer par flexion lors du serrage, sont favorisées par l'ondulation précitée.

Optionnellement, l'ondulation présente un sommet situé entre la portion d'attache et la portion de fixation, par exemple sensiblement à mi-chemin entre ces portions.

Optionnellement, l'ondulation est en saillie radiale.

L'orientation de l'ondulation en saillie radiale favorise le fait que les efforts de rappel élastique qu'elle procure s'exercent dans le sens allant vers l'axe du collier. Par ailleurs, la hauteur de saillie radiale de l'ondulation peut être déterminée de telle sorte qu'elle reste globalement dans l'encombrement radial du collier, évitant ainsi de former une saillie excessive. Le sommet de l'ondulation est alors convexe, vu de l'extérieur de la patte, c'est-à-dire du côté du premier tube opposé au collier.

Optionnellement, l'ondulation est inclinée par rapport à un plan radial, de sorte que, en allant vers le sommet de l'ondulation, on s'éloigne de la portion de fixation.

Dans ce cas, l'ondulation peut avoir une amplitude assez importante, tout en ayant un encombrement radial limité. De plus, en étant orientée dans le sens indiqué, l'ondulation n'interfère pas avec la mise en place du collier autour de l'extrémité du premier tube. De plus, lorsque le collier est serré sur les tubes aboutés, son diamètre diminue et la patte se déforme pour accompagner cette diminution de diamètre. L'inclinaison de l'ondulation permet de faire en sorte que, lors de cette déformation de la patte, sa portion de fixation, qui porte le collier, se déplace essentiellement radialement, en restant sensiblement dans la tranche axiale qu'elle occupait à l'état pré-monté, avant le serrage du collier. Ainsi, la patte n'a pas ou peu tendance à solliciter le collier en dehors de son bon positionnement axial par rapport aux extrémités aboutées des tubes.

Dans sa définition générale, l'invention prévoit au moins une patte de retenue. On peut en effet prévoir plusieurs pattes de retenue, par exemple deux ou trois pattes de retenue réparties angulairement de manière régulière, afin de favoriser un centrage précis du collier autour de l'extrémité du premier tube, avant son serrage.

Cependant, ainsi qu'on le verra dans la suite, la présence de plusieurs pattes de retenue n'est pas indispensable pour l'invention et il est au contraire avantageux de ne prévoir qu'une seule patte de retenue.

Par exemple, la bande du collier est réalisée en métal, en particulier en acier inoxydable, de type austénique ou ferritique et la patte est réalisée dans le même matériau et présente une épaisseur sensiblement égale à celle de la bande.

Optionnellement, la périphérie interne du collier présente un renfoncement apte à recevoir une saillie radiale formée à l'extrémité du premier tube. En particulier, la saillie radiale est annulaire et couvre l'ensemble de la circonférence du premier tube de sorte que le positionnement précis de la patte de retenue, considéré angulairement, n'a pas d'importance particulière, ce qui facilite la fabrication et le montage. Par exemple, la saillie radiale peut prendre la forme d'une surface d'appui analogue à celles décrites dans les documents EP 1 451 498 et EP 2 598 785, faisant saillie par rapport à la surface extérieure cylindrique du premier tube.

Optionnellement, la portion d'attache de la patte de retenue s'étend à une distance de l'axe du collier qui est inférieure ou égale au diamètre interne de ladite bande à l'état non serré.

Le diamètre interne de la bande à l'état non serré est défini pour que la bande puisse être enfilée sur l'extrémité du premier tube, sans que la saillie radiale du premier tube ne fasse obstacle à cet enfilement. En particulier, le diamètre interne de la bande est au moins égal à la dimension diamétrale du premier tube défini par sa saillie radiale. Dans ce cas, une fois le collier attaché au premier tube par la portion d'attache de la patte de retenue, et du fait que la distance de l'axe du collier (c'est-à-dire l'axe défini par l'enroulement de la bande du collier) est inférieure ou égale au diamètre interne de ladite bande à l'état non serré, la patte de retenue maintient naturellement la bande du collier autour de l'extrémité du premier tube, sans que cette bande ne fasse obstacle à l'accouplement des tubes. Lors de la mise en place du collier autour du premier tube, la portion d'attache de la patte peut être fléchie vers l'extérieur pour passer l'obstacle formé par la saillie radiale du premier tube, ou bien, en particulier lorsqu'une seule patte de retenue est présente, le collier peut être incliné pour éloigner la portion d'attache de la patte par rapport à l'axe du premier tube et permettre ainsi à cette portion d'attache de passer la saillie radiale, puis être redressé pour aligner son axe avec celui du premier tube et attacher ensuite la portion d'attache de la patte de retenue au premier tube.

Optionnellement, le collier présente deux extrémités aptes à être déplacées l'une par rapport à l'autre pour serrer le collier, et la patte de retenue est sensiblement diamétralement opposée à ces extrémités.

La patte de retenue coopère ainsi avec une partie du collier éloignée des moyens mis en oeuvre pour le serrage du collier, et n'interfère donc pas avec ces moyens.

Optionnellement, la portion de fixation est formée à l'extrémité libre de la patte de retenue, opposée à sa portion d'attache.

En particulier, les portions de fixation et d'attache peuvent être formées aux extrémités opposées de la patte de retenue.

La portion de fixation de la patte de retenue peut être fixée au collier par tout moyen approprié, en particulier par au moins l'un des modes de fixation comprenant la soudure, le sertissage, le clinchage, l'accrochage ou le clipsage.

Optionnellement, le collier présente deux extrémités en saillie radiale et une tige filetée de serrage coopérant avec lesdites extrémités pour les déplacer l'une par rapport à l'autre et serrer le collier par vissage.

L'invention concerne également un ensemble de raccordement de deux tubes, comprenant un système pour le raccordement bout à bout de deux tubes selon l'invention, et un premier tube, auquel est attachée la portion d'attache de la patte de retenue et qui est apte à être abouté avec un deuxième tube, la bande du collier s'étendant autour de l'extrémité du premier tube.

Cet ensemble comprend le système selon l'invention et le premier tube à l'extrémité duquel ce système est pré-monté dans un état dans lequel la bande du collier, à l'état non serré, s'étend autour de l'extrémité du premier tube.

Optionnellement, la portion d'attache de la patte de retenue est attachée au premier tube par soudure.

Cette soudure peut être réalisée par tout moyen connu, en particulier par une fusion partielle de la portion de d'attache de la patte de retenue. Il peut en particulier s'agir d'un ou plusieurs points de soudure, les efforts auxquels est soumise la soudure étant peu importants.

Optionnellement, la portion d'attache de la patte de retenue est attachée au premier tube par un collier d'attache.

Ce collier d'attache peut être simple et peu coûteux, car il a pour fonction d'attacher la patte de retenue au premier tube, sans être soumis à des contraintes exigeantes, en particulier au plan mécanique ou au plan de l'étanchéité.

Optionnellement, à l'état non serré, la bande du collier est espacée radialement de l'extrémité du premier tube.

Ainsi, un espace annulaire est défini entre la bande du collier et l'extrémité du premier tube, espace dans lequel l'extrémité du deuxième tube peut être insérée pour le raccordement et l'accouplement des tubes.

L'invention sera bien comprise, et ses avantages apparaîtront mieux, à la lecture de la description détaillée qui suit, d'un mode de réalisation représenté à titre d'exemple non limitatif.
- La figure 1 est une vue en perspective, montrant le collier pré-monté à l'extrémité du premier tube, avant le serrage du collier ;
- la figure 2 est une vue en coupe dans le plan II de la figure 1, ce plan étant défini par l'axe du tube et par un diamètre de ce tube passant par la patte de retenue ;
- la figure 2A montre une variante pour la fixation de la patte de retenue à la bande du collier, dans la zone IIA de la figure 2 ;
- la figure 3 est une vue schématique en bout, selon la flèche III de la figure 2 ;
- la figure 4 est une vue analogue à la figure 1, mais montrant le collier serré et le premier tube accouplé à un deuxième tube ; et
- la figure 5 est une vue en coupe dans le plan V de la figure 4, ce plan étant analogue au plan II de la figure 1.

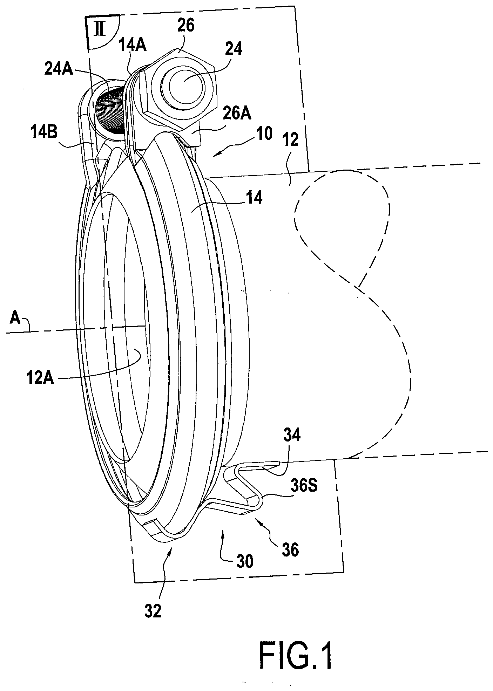

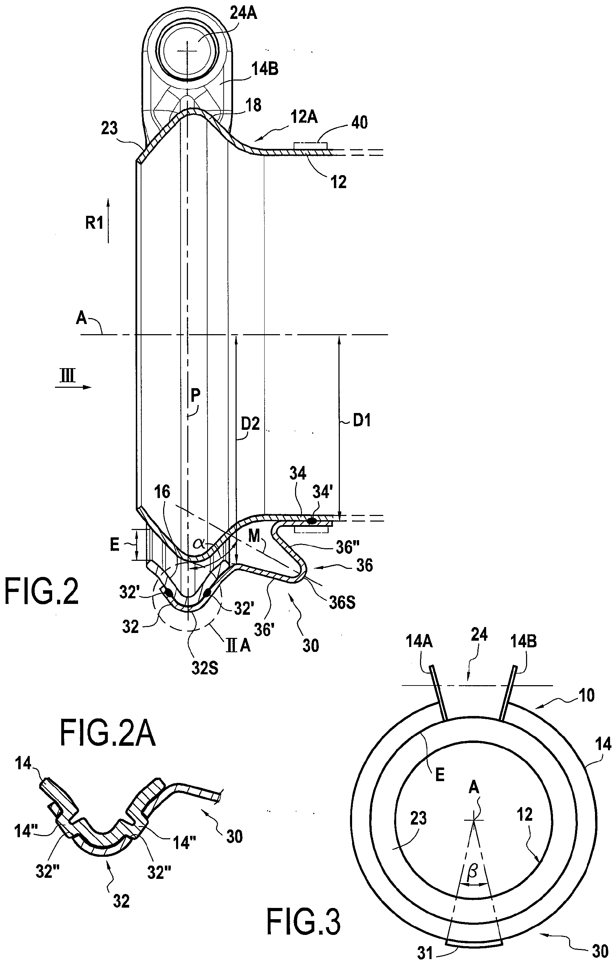

On décrit tout d'abord les figures 1 et 2, qui montrent un collier de serrage 10 pré-monté à l'extrémité 12A d'un premier tube 12. En l'espèce, le collier est globalement du même type que celui que décrivent EP 1 451 498 et EP 2 598 785. Il doit toutefois être entendu que l'invention n'est pas limitée à ce type de collier.

Dans toute la suite, on qualifiera de "internes" les éléments qui sont dirigés vers l'axe A du tube 12 ou qui sont les plus proches de cet axe par rapport à d'autres éléments qualifiés de "externes", les éléments "externes" étant également ceux qui sont dirigés à l'opposé de l'axe A.

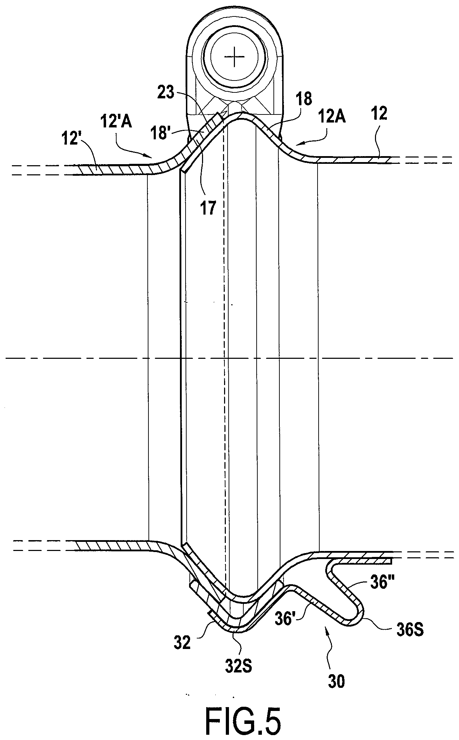

En l'espèce, le collier 10 comprend une bande 14 qui a une périphérie interne qui délimite un renfoncement 16 dans lequel des surfaces d'appui, respectivement 18 appartenant au premier tube 12 et 18' appartenant au deuxième tube 12' (voir figure 5) peuvent être insérées. Ce renfoncement et ces surfaces d'appui ont des formes telles que le serrage de la bande du collier contraint les extrémités des tubes à se rapprocher l'une de l'autre. Ainsi, la bande 14 présente en section avantageusement une forme en V tandis que les surfaces d'appui 18 et 18' ont un diamètre qui augmente graduellement vers les extrémités libres des tubes qui sont en regard, et sont par exemple de forme tronconique.

La bande 14 du collier présente des extrémités, respectivement 14A et 14B qui sont redressées sensiblement radialement de manière à former des pattes d'appui. Ces pattes sont percées de manière à permettre le passage de la tige 24A d'une vis 24 à travers ces pattes. La tête de la vis 24 est calée par rapport à la patte d'appui 14B, tandis qu'un écrou 26 est retenu par rapport à l'autre patte d'appui 14A. Sur les figures, la tête de la vis n'est pas visible, mais elle peut être analogue à ce que montrent les documents EP 1 451 498 et EP 2 598 785. En l'espèce, une rondelle de calage 26A est interposée entre la patte d'appui 14A et l'écrou 26, cette rondelle ayant une encoche la calant par rapport à la pointe du V que forme la bande 14 pour l'empêcher de tourner par rapport à elle lors de la rotation de la vis.

En se reportant à la figure 5, on peut relever que l'extrémité 12'A du deuxième tube 12' est une extrémité femelle, sa périphérie interne présentant un évasé. En revanche, l'extrémité 12A du premier tube 12 est une extrémité mâle qui, au-delà de la surface d'appui 18, présente une périphérie extérieure 23 dont le diamètre va en diminuant vers l'extrémité libre. La partie d'extrémité 12A ainsi formée peut donc s'insérer, sensiblement avec complémentarité de forme, à l'intérieur de l'évasé 17 formé à l'extrémité du tube 12'. Cette conformation, associée éventuellement à une rondelle interposée entre la périphérie externe 23 de l'extrémité libre du premier tube et la périphérie interne de l'évasé 17 du deuxième tube, peut assurer l'étanchéité du raccordement entre les deux tubes, lorsque le système de serrage est serré. Une telle rondelle peut ne pas être nécessaire, par exemple en choisissant pour les deux tubes un matériau qui permet la légère déformation des surfaces en contact sous l'effet du serrage, assurant ainsi l'étanchéité requise, en particulier lorsque le niveau d'étanchéité requis n'est pas extrêmement élevé.

Le collier de serrage 10 comporte une patte de retenue 30 qui, à l'état pré-monté du collier, est fixée au premier tube 12. Cette patte 30 présente une portion de fixation 32 par laquelle elle est fixée à la bande du collier et une portion d'attache 34, par laquelle elle est fixée au tube 12. En l'espèce, la portion de fixation 32 a une forme en crochet dont l'extrémité libre est dirigée vers l'axe A. Vue en coupe axiale, cette portion de fixation présente en effet sensiblement une forme en V (vue en section axiale), adaptée à recevoir dans son creux la forme en V de la bande du collier. On relève par ailleurs que la portion de fixation 32 est en l'espèce formée à l'extrémité libre de la patte de retenue, opposée à sa portion d'attache 34. La patte 30 est globalement orientée sensiblement axialement à partir de sa partie de fixation et jusqu'à sa partie d'attache, et s'étend vers l'arrière du collier, c'est-à-dire dans le sens allant en s'éloignant le long du tube 12 de l'extrémité 12A de ce dernier.

A l'état libre, c'est-à-dire avant le pré-montage du collier 10 sur le tube 12, ou à l'état pré-monté, la portion d'attache 34 de la patte de retenue 30 s'étend à une distance D1 de l'axe du collier (confondu sur la figure avec l'axe A du tube 12) qui est inférieure ou égale au rayon interne D2 de la bande du collier (lequel rayon interne étant alors bien entendu mesuré à l'état non serré du collier).

La portion de fixation 32 de la patte de retenue 30 peut être fixée à la bande 14 par tout moyen approprié. Ainsi, elle peut être soudée sur la bande et on a repéré sur la figure 2 deux points de soudure 32', respectivement situés sur chacun des pans du V.

Comme le montre la figure 2A, un autre mode de fixation tel qu'un clinchage ou un sertissage, est également envisageable. Ainsi, sur la figure 2A, on voit que la portion de fixation 32 de la patte 30 présente deux encoches 32", respectivement sur chacune des branches du V, dans lesquelles la matière de la bande 14 du collier est repoussée pour former des saillies 14" qui pénètrent dans ces encoches.

Avec la forme en V précitée pour la section de la bande 14 et pour la portion de fixation 32 de la patte de retenue 30, il est intéressant de prévoir un point de fixation sur chaque branche du V.

La fixation pourrait également, par exemple, être réalisée par accrochage, les encoches 32" étant remplacées par de petits crochets qui pénètrent dans des encoches réalisées à la place des saillies 14" ou vice-versa, ou encore par clipsage, par exemple à l'aide d'agrafes ou de clips rapportés, non représentés.

De manière générale, de nombreux modes de fixation sont envisageables, la fixation entre la patte de retenue et la bande du collier n'étant pas, en principe, soumise à des contraintes élevées.

L'ensemble du collier, comprenant la bande et la patte de retenue, est manipulé comme un tout et peut être livré assemblé.

Par la portion d'attache 34 de la patte de retenue, le collier peut être attaché au premier tube 12 en situation pré-montée.

On relève en l'espèce que la portion d'attache 34 est orientée axialement, située à l'opposé de la portion de fixation 32, et fixée contre la périphérie externe du tube 12. En particulier, la portion d'attache de la patte de retenue 30 peut être attachée au premier tube 12 par une soudure, comprenant un ou plusieurs points de soudure 34'.

On pourrait cependant envisager d'autres façons d'attacher la portion d'attache au tube. Par exemple, comme indiqué en traits mixtes, la portion d'attache 34 peut être solidaire d'un collier d'attache 40, qui est lui-même attaché autour du tube 12. En particulier, il peut s'agir d'un collier du type ayant deux extrémités qui s'accrochent l'une sur l'autre. Ainsi, ce collier est initialement ouvert pour être passé autour du tube, puis fermé et serré sur ce tube. Il s'agit par exemple d'un collier du type décrit par le document de brevet européen EP 0 003 192. La portion d'attache 34 de la patte de retenue peut être fixée à ce collier par tout moyen approprié, en particulier par soudure, clipsage, sertissage ou clinchage.

Dans le cas où on utilise un collier d'attache 40, l'ensemble constitué par le collier de serrage 10, comprenant la patte de retenue 30, et le collier d'attache 40, peut être livré comme un tout et pré-monté à l'extrémité du tube 12.

La patte de retenue 30 présente une ondulation 36 qui est située entre sa portion d'attache 34 et sa portion de fixation 32. Cette ondulation est en saillie radiale à l'extérieur du premier tube 12. Elle est située sur une partie intermédiaire de la patte 30 qui forme une transition entre la portion d'attache 34, sensiblement située sur le diamètre du collier, et la portion de fixation 32, sensiblement située sur le diamètre courant du premier tube. L'ondulation présente un sommet 36S situé sur cette partie intermédiaire, sensiblement à mi-chemin entre les portions d'attache et de fixation. Vue dans un plan radial, l'ondulation forme une portion de boucle ou de V à pointe arrondie. En l'espèce, elle est convexe vue de l'extérieur. On voit par ailleurs que l'ondulation 36 est inclinée, par rapport à un plan radial P (voir figure 2), de sorte qu'en allant vers le sommet 36S de l'ondulation, on s'éloigne de la portion de fixation 32. En l'espèce, l'angle d'inclinaison α est, à l'état non serré du collier, de l'ordre de 30 à 60 degrés. Cet angle est mesuré entre le plan P et un plan médian M de l'ondulation passant par son sommet 36S. L'ondulation s'étend sur toute la largeur de la patte de retenue, cette largeur étant mesurée perpendiculairement au plan de la figure 2, et forme donc une vague de la patte de retenue.

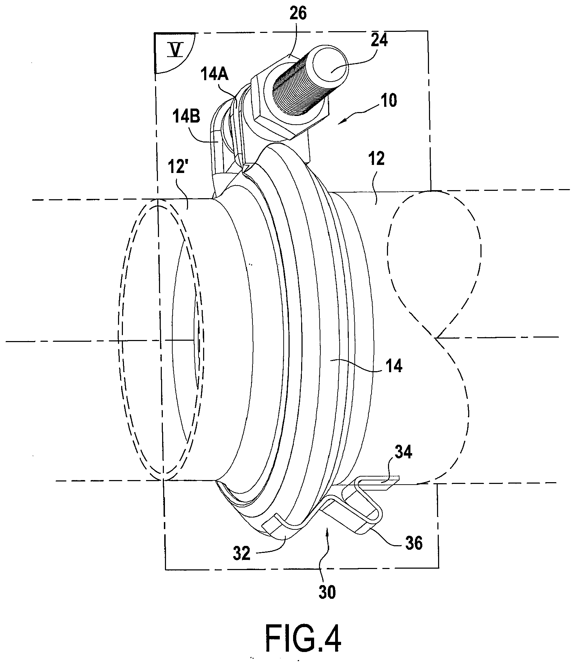

La patte de retenue est formée dans une bande, en particulier une bande de matériau de matière métallique, pliée et écrouie de manière convenable. En s'intéressant en particulier aux figures 2 et 4, on constate que, aussi bien à l'état non serré qu'à l'état serré du collier, l'ondulation est globalement comprise dans l'encombrement radial du système de serrage, puisque le sommet 36S de l'ondulation ne dépasse pas ou pratiquement pas radialement vers l'extérieur par rapport au sommet 32S du crochet formé à la portion de fixation 32.

Dans le mode de réalisation représenté, une seule patte de retenue 30 suffit pour retenir le collier à l'état pré-monté à la première extrémité 12A du tube 12. En s'intéressant aux figures 2 et 3, on voit que, dans l'état pré-monté du collier 10 à l'extrémité 12A du tube 12, un espace annulaire E est ménagé entre la périphérie externe du tube 12 et la périphérie interne de la bande 14 du collier. On voit également sur la figure 3 que, dans l'état pré-monté, le collier est sensiblement centré par rapport au tube, l'axe du collier étant sur cette figure confondu avec l'axe A du tube.

Ainsi, l'espace annulaire E permet l'insertion de l'extrémité 12'A du deuxième tube 12' (voir figures 4 et 5) sous la bande 14 du collier et l'accouplement des deux tubes.

Ainsi, la patte de retenue 30 est suffisamment rigide pour porter la bande du collier en porte-à-faux et maintenir son positionnement correct par rapport au premier tube 12. Par ailleurs, la patte de retenue 30 peut être fléchie élastiquement pour, d'une part, faciliter éventuellement le pré-montage du collier sur le premier tube et, d'autre part, permettre à la patte d'accompagner la réduction du diamètre du collier lors du serrage de ce dernier. L'ondulation 36 favorise cette flexibilité élastique. On voit sur la figure 2 que l'ondulation est ouverte, c'est-à-dire que ses deux jambes 36' et 36" qui s'étendent de part et d'autre entre son sommet 36S et, respectivement, la portion de fixation 32 de la patte de retenue 30 et sa portion d'attache 34 au premier tube sont écartées. En revanche, sur la figure 5, on constate que les deux jambes 36' et 36" se sont rapprochées.

Comme indiqué précédemment, la patte de retenue peut être fabriquée dans le même matériau que la bande du collier, ou un matériau présentant globalement les mêmes propriétés mécaniques. Il s'agit en particulier d'un métal tel que de l'acier qui, selon l'application considérée, peut être un acier inoxydable. Par exemple, lorsque l'invention est appliquée aux tubes d'échappement de moteurs de véhicules, on peut préférer choisir de l'acier inoxydable. Sur la figure 3, on relève que la patte de retenue couvre un secteur angulaire β de quelques degrés, par exemple de l'ordre de 2° à 10°. Dans de nombreux cas, si le collier a un diamètre de l'ordre de 60 à 100 mm (comme c'est par exemple le cas lorsqu'il sert à abouter deux tubes d'échappement d'un moteur de véhicule), la patte de retenue peut avoir une largeur (mesurée selon la circonférence du collier) est de l'ordre de 10 à 20 mm. La patte de retenue peut avoir une épaisseur analogue à celle de la bande du collier. En particulier, elle peut avoir une épaisseur de l'ordre de 1 à 1,5 mm.

Une fois que le collier est placé en attente, c'est-à-dire en situation de pré-montage, à l'extrémité 12A du premier tube 12, il peut être manipulé comme un tout avec ce premier tube. Pour assembler le premier tube 12 avec le deuxième tube 12', on amène ce dernier vers l'extrémité 12A du premier tube en insérant son extrémité 12'A dans l'espace annulaire E précité, puis on serre le collier de manière classique. En l'espèce, les moyens de serrage du collier comprennent la vis précitée qui, lorsque l'écrou est vissé sur la tige filetée de cette vis, réduit l'espace entre les pattes d'appui 14A et 14B. D'autres moyens de serrage pourraient bien entendu être envisagés, en particulier un accrochage ou un pincement.

## Revendications

1. Système pour le raccordement bout à bout de deux tubes (12, 12'), le système comprenant un collier de serrage (10) ayant une bande de serrage (14) apte à être serrée autour des extrémités (12A, 12'A) aboutées des deux tubes (12, 12'), le collier (10) comprenant une patte de retenue (30), qui présente une portion de fixation (32) par laquelle ladite patte de retenue (30) est fixée à la bande (14) du collier et qui s'étend sensiblement axialement vers une portion d'attache (34) de ladite patte de retenue (30) par laquelle ladite patte de retenue est apte à être attachée au premier tube (12) au voisinage de la première extrémité (12A) de ce dernier,
**caractérisé en ce que** la patte de retenue (30) présente une ondulation (36) située entre sa portion de fixation (32) et sa portion d'attache (34).

2. Système selon la revendication 1, **caractérisé en ce que** l'ondulation présente un sommet situé entre la portion d'attache et la portion de fixation, de préférence sensiblement à mi-chemin entre ces portions.

3. Système selon la revendication 1 ou 2, **caractérisée en ce que** l'ondulation (36) est en saillie radiale.

4. Système selon les revendications 2 et 3, **caractérisé en ce que** l'ondulation (36) est inclinée par rapport à un plan radial, de sorte que, en allant vers le sommet (36S) de l'ondulation (36), on s'éloigne de la portion de fixation (32).

5. Système selon l'une quelconque des revendications 1 à 4, **caractérisé en ce que** la périphérie interne du collier (10) présente un renfoncement (16) apte à recevoir une saillie radiale (18) formée à l'extrémité (12A) du premier tube.

6. Système selon l'une quelconque des revendications 1 à 5, **caractérisé en ce que** la portion d'attache (34) de la patte de retenue (30) s'étend à une distance (D1) de l'axe (A) du collier (10) qui est inférieure ou égale au rayon interne (D2) de ladite bande (14) à l'état non serré.

7. Système selon l'une quelconque des revendications 1 à 6, **caractérisé en ce que** le collier (10) présente deux extrémités (14A, 14B) aptes à être déplacées l'une par rapport à l'autre pour serrer le collier, et **en ce que** la patte de retenue (30) est sensiblement diamétralement opposée à ces extrémités.

8. Système selon l'une quelconque des revendications 1 à 7, **caractérisé en ce que** la portion de fixation (32) est formée à l'extrémité libre de la patte de retenue (30), opposée à sa portion d'attache (34).

9. Système selon l'une quelconque des revendications 1 à 8, **caractérisé en ce que** la portion de fixation (32) de la patte de retenue (30) est fixée à la bande (14) du collier (10) par au moins l'un des modes de fixation comprenant la soudure, le sertissage, le clinchage, l'accrochage ou le clipsage.

10. Ensemble de raccordement de deux tubes (12, 12'), comprenant un système selon l'une quelconque des revendications 1 à 9 et un premier tube (12), auquel est attachée la portion d'attache (34) de la patte de retenue (30) et qui est apte à être abouté avec un deuxième tube (12'), la bande (14) du collier s'étendant autour de l'extrémité (12A) du premier tube.

11. Ensemble selon la revendication 10, **caractérisé en ce que** la portion d'attache (34) de la patte de retenue (30) est attachée au premier tube (12) par soudure.

12. Ensemble selon la revendication 10, **caractérisé en ce que** la portion d'attache (34) de la patte de retenue (30) est attachée au premier tube (12) par un collier d'attache (40).

13. Ensemble selon l'une quelconque des revendications 10 à 12, **caractérisé en ce que**, à l'état non serré, la bande (14) du collier est espacée radialement (E) de l'extrémité (12A) du premier tube (12).

## Patentansprüche

1. System zur Stoß-an-Stoß-Verbindung von zwei Rohren (12, 12'), wobei das System einen Spannkragen (10) mit einem Spannband (14) umfasst, das dazu geeignet ist, um die aneinander stoßenden Enden (12A, 12'A) der zwei Rohre (12, 12') gespannt zu werden, wobei der Kragen (10) eine Haltelasche (30) umfasst, die einen Fixierabschnitt (32) aufweist, durch welchen die Haltelasche (30) an dem Band (14) des Kragens fixiert wird und der sich im Wesentlichen axial zu einem Befestigungsabschnitt (34) der Haltelasche (30) erstreckt, durch welchen die Haltelasche an dem ersten Rohr (12) benachbart zu dem ersten Ende (12A) desselben befestigt werden kann,
**dadurch gekennzeichnet, dass** die Haltelasche (30) eine Wellung (36) aufweist, die zwischen ihrem Fixierabschnitt (32) und ihrem Befestigungsabschnitt (34) liegt.

2. System nach Anspruch 1, **dadurch gekennzeichnet, dass** die Wellung einen Scheitel aufweist, der zwischen dem Befestigungsabschnitt und dem Fixierabschnitt, vorzugsweise im Wesentlichen mittig zwischen diesen Abschnitten liegt.

3. System nach Anspruch 1 oder 2, **dadurch gekennzeichnet, dass** die Wellung (36) radial vorspringt.

4. System nach den Ansprüchen 2 und 3, **dadurch gekennzeichnet, dass** die Wellung (36) im Verhältnis zu einer radialen Ebene derart geneigt ist, dass im Verlauf zu dem Scheitel (36S) der Wellung (36) hin die Entfernung von dem Fixierabschnitt (32) zunimmt.

5. System nach einem der Ansprüche 1 bis 4, **dadurch gekennzeichnet, dass** der innere Umfang des Kragens (10) eine Einkerbung (16) aufweist, die dazu geeignet ist, einen radialen Vorsprung (18) aufzunehmen, der an dem Ende (12A) des ersten Rohrs ausgebildet ist.

6. System nach einem der Ansprüche 1 bis 5, **dadurch gekennzeichnet, dass** der Befestigungsabschnitt (34) der Haltelasche (30) sich in einem Abstand (D1), der im ungespannten Zustand kleiner als oder gleich dem Innenradius (D2) des Bandes (14) ist, von der Achse (A) des Kragens (10) erstreckt.

7. System nach einem der Ansprüche 1 bis 6, **dadurch gekennzeichnet, dass** der Kragen (10) zwei Enden (14A, 14B) aufweist, die dazu geeignet sind, relativ zueinander verschoben zu werden, um den Kragen zu spannen, und dass die Haltelasche (30) diesen Enden im Wesentlichen diametral entgegengesetzt ist.

8. System nach einem der Ansprüche 1 bis 7, **dadurch gekennzeichnet, dass** der Fixierabschnitt (32) an dem freien Ende der Haltelasche (30) ihrem Befestigungsabschnitt (34) entgegengesetzt ausgebildet ist.

9. System nach einem der Ansprüche 1 bis 8, **dadurch gekennzeichnet, dass** der Fixierabschnitt (32) der Haltelasche (30) an dem Band (14) des Kragens (10) durch zumindest eines der Fixierverfahren umfassend Schweißen, Crimpen, Stauchen, Einhaken oder Aufklipsen fixiert ist.

10. Anordnung zur Verbindung von zwei Rohren (12, 12'), umfassend ein System nach einem der Ansprüche 1 bis 9 und ein erstes Rohr (12), an dem der Befestigungsabschnitt (34) der Haltelasche (30) befestigt ist und das geeignet ist, Stoß an Stoß an ein zweites Rohr (12') anzuliegen, wobei das Band (14) des Kragens sich um das Ende (12A) des ersten Rohrs herum erstreckt.

11. Anordnung nach Anspruch 10, **dadurch gekennzeichnet, dass** der Befestigungsabschnitt (34) der Haltelasche (30) durch Schweißen an dem ersten Rohr (12) befestigt ist.

12. Anordnung nach Anspruch 10, **dadurch gekennzeichnet, dass** der Befestigungsabschnitt (34) der Haltelasche (30) durch einen Befestigungskragen (40) an dem ersten Rohr (12) befestigt ist.

13. Anordnung nach einem der Ansprüche 10 bis 12, **dadurch gekennzeichnet, dass** das Band (12) des Kragens im ungespannten Zustand radial (E) von dem Ende (12A) des ersten Rohrs (12) beabstandet ist.

## Claims

1. A system for connecting two tubes (12, 12') together end to end, the system comprising a clamping collar (10) having a clamping band (14) suitable for being tightened around the abutting ends (12A, 12'A) of the two tubes (12, 12'), the collar (10) having a retaining tab (30) that presents a fastener portion (32) whereby said retaining tab (30) is fastened to the band (14) of the collar and that extends substantially axially towards an attachment portion (34) of said retaining tab (30) whereby said retaining tab is suitable for being attached to the first tube (12) in the vicinity of its first end (12A) ,
**characterized in that** the retaining tab (30) presents an undulation (36) situated between its fastener portion (32) and its attachment portion (34).

2. A system according to claim 1, **characterized in that** the undulation presents a ridge situated between the attachment portion and the fastener portion, and preferably substantially halfway between these portions.

3. A system according to claim 1 or claim 2, **characterized in that** the undulation (36) projects radially.

4. A system according to claims 2 and 3, **characterized in that** the undulation (36) is inclined relative to a radial plane, such that going towards the ridge (36S) of the undulation (36) involves going away from the fastener portion (32).

5. A system according to any one of claims 1 to 4, **characterized in that** the internal periphery of the collar (10) presents a trough (16) suitable for receiving a radial projection (18) formed at the end (12A) of the first tube.

6. A system according to any one of claims 1 to 5, **characterized in that** the attachment portion (34) of the retaining tab (30) extends at a distance (D1) from the axis (A) of the collar (10) that is less than or equal to the internal radius (D2) of said band (14) in the non-clamped state.

7. A system according to any one of claims 1 to 6, **characterized in that** the collar (10) presents two ends (14A, 14B) suitable for being moved relative to each other in order to tighten the collar, and **in that** the retaining tab (30) is substantially diametrically opposite these ends.

8. A system according to any one of claims 1 to 7, **characterized in that** the fastener portion (32) is formed at the free end of the retaining tab (30) remote from its attachment portion (34).

9. A system according to any one of claims 1 to 8, **characterized in that** the fastener portion (32) of the retaining tab (30) is fastened to the band (14) of the collar (10) by at least one of the modes of fastening comprising welding, crimping, clinching, hooking, or clipping.

10. An assembly for coupling two tubes (12, 12') together, the assembly comprising a system according to any one of claims 1 to 9 and a first tube (12) having attached there to the attachment portion (34) of the retaining tab (30) and suitable for being abutted with a second tube (12'), the band (14) of the collar extending around the end (12A) of the first tube.

11. An assembly according to claim 10, **characterized in that** the attachment portion (34) of the retaining tab (30) is attached to the first tube (12) by welding or brazing.

12. An assembly according to claim 10, **characterized in that** the attachment portion (34) of the retaining tab (30) is attached to the first tube (12) by an attachment collar (40).

13. An assembly according to any one of claims 10 to 12, **characterized in that**, in the non-clamped state, the band (14) of the collar is radially spaced apart (E) from the end (12A) of the first tube (12).
